**Europäisches Patentamt**

**European Patent Office**

**Office européen des brevets**

(11) Veröffentlichungsnummer: **0 064 663**
**A2**

(12) # EUROPÄISCHE PATENTANMELDUNG

(21) Anmeldenummer: **82103568.0**

(22) Anmeldetag: **27.04.82**

(51) Int. Cl.$^3$: **E 02 D 17/20**
**E 02 D 5/62, E 02 D 5/74**
**E 02 D 5/54, E 02 D 5/46**
**E 02 D 5/80**

(30) Priorität: **08.05.81 DE 3118280**

(43) Veröffentlichungstag der Anmeldung:
**17.11.82 Patentblatt 82/46**

(84) Benannte Vertragsstaaten:
**AT BE DE FR NL**

(71) Anmelder: **Leonhard Weiss Bauunternehmung**
**Zweigniederlassung**
**Brunnenstrasse 36**
**D-7180 Crailsheim(DE)**

(72) Erfinder: **Weichsel, Joachim**
**Frankenstrasse 27**
**D-7110 Oehringen(DE)**

(74) Vertreter: **Schroeter, Helmut et al,**
**Bocksgasse 49**
**D-7070 Schwäbisch Gmünd(DE)**

(54) **Verfahren und Ventilrohr zur Stabilisierung von Rutschhängen.**

(57) Verfahren und Ventilrohr dienen zur Stabilisierung von Rutschhängen durch Einbringen von Pfählen in den festen, ungestörten Boden oder Fels und Injizierung eines Verfestigungsmittels. In ein Bohrloch (18) wird Verfestigungsmittel gefüllt. Ein unten geschlossenes Ventilrohr (22), das über seine Länge verteilte Auslaßventile (31) hat, wird zentrisch in das Bohrloch und das noch flüssige Verfestigungsmittel eingeführt. Nach dessen Aushärtung wird in das Ventilrohr (22) ein Druckrohr (32) eingeführt, das unten mindestens eine Austrittsöffnung (34) hat und unterhalb und oberhalb dieser Öffnung gegen das Ventilrohr abdichtet. Hiermit wird in verschiedenen Höhen Verfestigungsmittel in Fels oder Erdreich injiziert.

Fig. 6

Leonhard Weiss KG

99-10
7. Mai 1981
S/Scha

## VERFAHREN UND VENTILROHR ZUR STABILISIERUNG VON RUTSCHHÄNGEN

Die Erfindung bezieht sich auf ein Verfahren zur Stabilisierung von Rutschhängen. Hänge, bei denen die Gefahr besteht, daß ein Teil des Erdreichs abrutscht, treten z. B. beim Bau von Fahrbahnen als Hänge von Dämmen oder von Einschnitten auf. Zu unterscheiden sind drei Höhenbereiche, nämlich zuunterst Fels oder fester und ungestörter Boden. Darüber eine Schicht aus gestörtem Material, das an einer Gleitfläche an der Oberseite des Felses oder festen Bodens abrutschen kann. Es können übereinander auch mehrere Gleitflächen vorhanden sein. Die Schicht aus gestörtem Material ist dann von Gleitflächen durchsetzt und kann selbst als "Gleitschicht" bezeichnet werden. Grundwasser, das in diese Schicht eindringen kann, hält die Gleitfläche(n) schmierig und damit gleitfähig. Zuoberst befindet sich eine Deckschicht aus Bodenmaterial, in der Grund- und Tagwasser möglichst ungestört fließen sollen.

Durch die DE-PS 26 11 091 und die DE-OS 26 31 745 sind Verfahren bekannt geworden, durch Einbringen von Pfählen bis unter die Gleitfläche und Injizierung eines Verfestigungsmittels aus den Pfählen in Fels und/oder Erdreich einen Rutschhang zu stabilisieren. Als Injektionsmittel werden Zementsuspension, Chemikal-Zement oder Wasserglas mit Härterzusatz verwendet. Nach dem bekannten Verfahren, insbesondere nach der oben genannten Patentschrift, wird aus einem rohrförmigen Pfahl mit seitlichen Öffnungen Verfestigungsmittel in das Erdreich injiziert, wobei das Verfestigungsmittel aus allen Öffnungen über die Höhe des Pfahls gleichzeitig austreten soll. Dieses Verfahren führt zu keinen befriedigenden Ergebnissen, da das Verfestigungsmittel,dem Weg des geringsten Widerstandes folgend, hauptsächlich in den oberen Bereichen austritt und infolgedessen gerade die Tagwasser und Grundwasser führende Deckschicht verfestigt und damit den Wasserabfluss stört. Dies führt zu Grundwasserstauungen, die Schäden verursachen können. Dagegen wird oberhalb und unterhalb der Gleitfläche(n) nur sehr wenig Verfestigungsmittel injiziert, so daß die beabsichtigte Verfestigung gerade in diesem Bereich nicht eintritt.

Durch die vorliegende Erfindung soll ein Verfahren geschaffen werden, das es ermöglicht, gezielt in bestimmten Höhenlagen des Pfahls Verfestigungsmittel zu injizieren. Man kann infolgedessen dafür sorgen, daß nur im untersten Bereich aus Fels oder festem Boden und der darüberliegenden Schicht aus gestörtem Boden injiziert wird, also beiderseits der Gleitfläche(n) nicht aber in der oben liegenden Deckschicht, die Grund- und Tagwasser führen soll.

Diese Aufgabe wird durch die Erfindung nach Anspruch 1 gelöst, auf dessen Wortlaut im folgenden Bezug genommen wird.

Zur gezielten Injektion in bestimmten Höhenlagen dienen
das Ventilrohr nach Merkmal c und das Druckrohr nach Merkmal d, dessen Austrittsöffnung für das Verfestigungsmittel nach und nach auf einzelne Austrittsventile
des Ventilrohrs einstellbar ist. Da man zunächst ein
Bohrloch niedergebracht hat, ist die Zusammensetzung
des Bodens und ist insbesondere die Grenze zwischen der
gestörten Schicht und der Deckschicht ihrer Höhe
nach bekannt. Man ist somit in der Lage, die Injektion
auf die Bereiche unterhalb der Deckschicht zu beschränken.

Eine Injektion   in andere als den gerade angesteuerten
Höhenbereich wird dadurch vermieden, daß nach Merkmal b
Verfestigungsmittel (insbesondere Zementsuspension) in
das Bohrloch eingefüllt wird und erst nach dem Aushärten
dieses Verfestigungsmittels injiziert wird (Merkmal e),
so daß es jeweils nur in der Höhe eines der Ventile aufgebrochen wird und im übrigen verhindert, daß flüssiges,
gerade injiziertes Verfestigungsmittel in eine andere als
die gerade angesteuerte Höhenlage gelangt.

Da auf diese Weise mit Sicherheit in die Bereiche oberhalb
und unterhalb der Gleitschicht injiziert wird, wird der
Hang stabilisiert und ein weiteres Gleiten zuverlässig
vermieden.

Da man mit Sicherheit angeben kann, welche Mengen an Verfestigungsmittel in welche Höhenlagen eingebracht werden,
kann man hierauf statistische Berechnungen gründen.

Nach erfolgter Hangstabilisierung kann man durch Kontrollbohrungen oder Sondierungen die sich ergebenden neuen Bodenkennwerte feststellen und sie in statistische Berechnungen mit einbeziehen. Durch Meßpegel kann man Grundwasserhöhe und Grundwasserlauf feststellen, sowie  die Tat-

sache, daß ein Aufstauen des Grundwassers vermieden wurde. Ebenso ist meßbar, daß weitere Rutschbewegungen des Hanges unterbleiben oder auf ein noch vertretbar geringes Ausmaß herabgesetzt wurden.

## Weiterbildungen der Erfindung

Wird nach Anspruch 2 zum Bohren eine Hohlschnecke verwendet, so kann man hierdurch einerseits beim Bohren Erkenntnisse über die Bodenzusammensetzung gewinnen, andererseits das Bohrloch beim Herausziehen der Hohlschnecke mit Verfestigungsmittel füllen, so daß ein Einfallen des Bohrloches verhindert wird.

Nach dem Injizieren wird das Druckrohr aus dem Ventilrohr entfernt. Der Pfahl kann dann so verbleiben. Ist eine weitere Verstärkung erforderlich, so kann nach Anspruch 3 in das Ventilrohr Verfestigungsmittel eingefüllt und mindestens ein Bewährungsstab eingetaucht werden, d. h. im allgemeinen bis zum Grunde des Ventilrohrs eingeführt werden.

Die Pfähle können an Rutschhängen sehr stark auf Biegung beansprucht werden. Um der Gefahr vorzubeugen, daß der das Ventilrohr umgebende Teil aus ausgehärtetem Verfestigungsmittel bei Biegebeanspruchungen abspringt, kann nach Anspruch 4 das Ventilrohr eine profilierte Außenwandung erhalten und mit einer Bewehrungslage aus Kunststoffasern versehen sein, an der das Verfestigungsmittel gut haftet.

Ein Ausführungsbeispiel der Erfindung wird im folgenden anhand der beigefügten Zeichnungen beschrieben.

Figur 1 zeigt im Querschnitt und schematisiert einen Bahndamm mit einem Rutschhang, der nach der Erfindung stabilisiert ist.

Figur 2 ist ein lotrechter Schnitt durch die verschiedenen Bodenbereiche mit nach der Erfindung eingesetztem Pfahl, wobei die Breiten gegenüber den Höhen 10fach übertrieben dargestellt sind.

Figur 3 bis 7 sind Prinzipdarstellungen in lotrechtem Schnitt von einzelnen Verfahrensstufen und ihren Ergebnissen.

Figur 8 und 9 zeigen im Querschnitt bzw. teilweisen Längsschnitt ein Kunststoffrohr in Sternform mit äußerer Bewehrungslage aus Kunststoffasern.

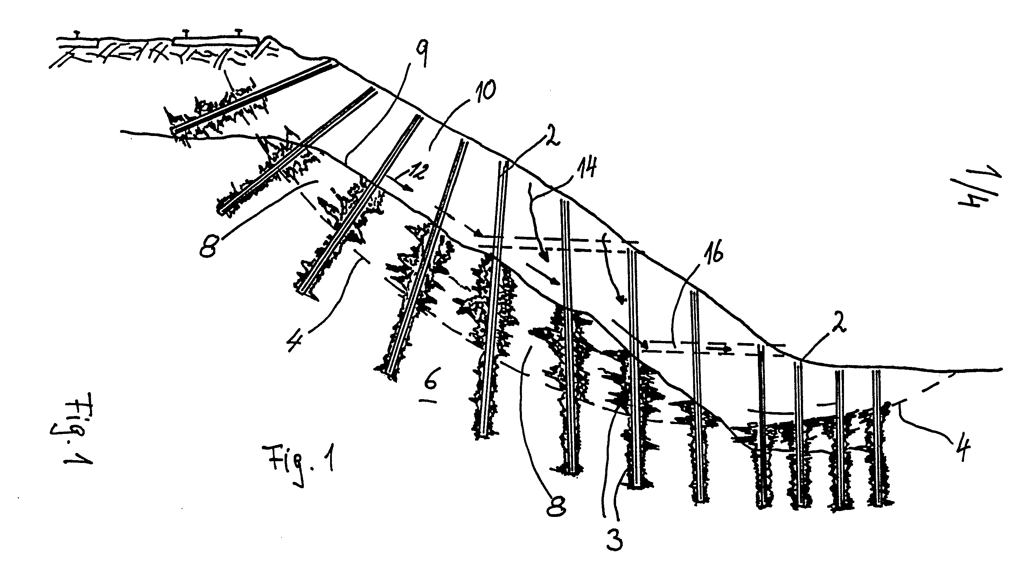

Figur 1 zeigt im Querschnitt und im Maßstab 1 : 100 einen Eisenbahndamm, dessen Böschung, die einen Rutschhang darstellt, durch Einsetzen von Pfählen 2 nach der Erfindung stabilisiert wurde. Die Pfähle haben eine Länge von drei bis sieben Metern. Man erkennt in das Erdreich injiziertes Verfestigungsmittel 3.

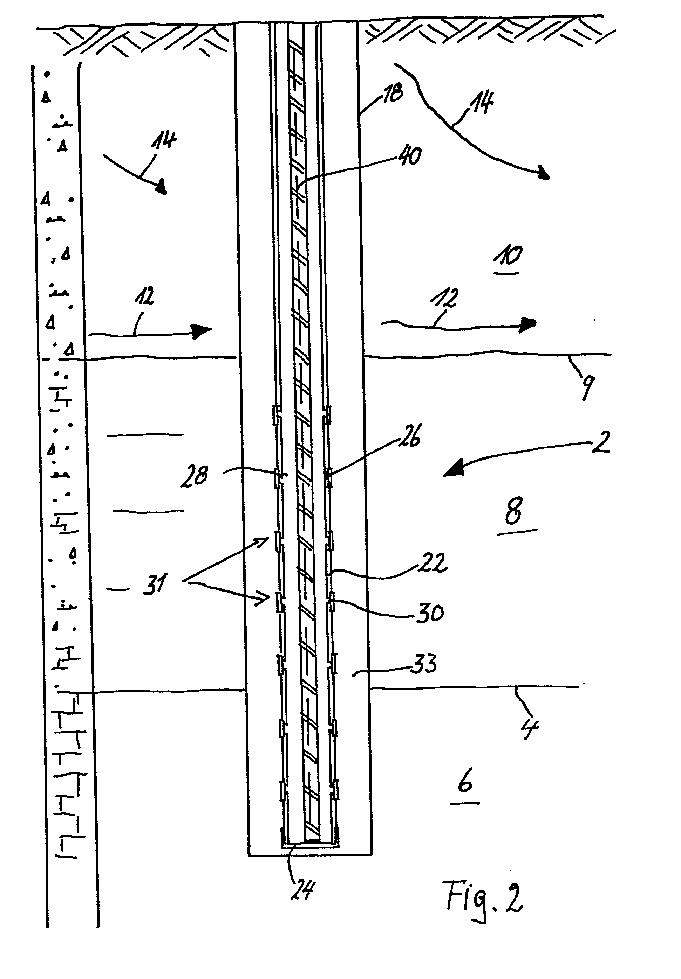

Figur 2 zeigt in lotrechtem Schnitt einen in ein ebenes Gelände eingesetzten Pfahl nach der Erfindung bei einem Maßstab von 1 : 50 in lotrechter Richtung und 1 : 5 in waagerechter Richtung. Die Breite ist also gegenüber der Höhe 10fach übertrieben groß dargestellt.

In beiden Figuren wurde der Einfachheit halber nur eine
einzige Gleitfläche 4 dargestellt. Unterhalb dieser Gleitfläche befindet sich ein Bereich 6 aus festem, ungestörtem
Boden, oberhalb der Gleitfläche 4 eine Schicht 8 aus durch
Baumaßnahmen gestörtem Boden. Die Schicht 8 ist eine potentielle Gleitschicht, neigt also dazu, ohne besondere Maßnahmen an der Gleitfläche 4 abzurutschen. Oberhalb einer
Grenzfläche 9 befindet sich eine Deckschicht 10. Die Deckschicht 10 soll Grundwasser (Pfeile 12) und bei Niederschlägen Tagwasser (Pfeile 14) führen. Dagegen soll durch
Maßnahmen nach der Erfindung verhindert werden, daß Wasser
in nennenswerten Mengen in die Schicht 8 eindringt. Es soll
erreicht werden, daß die Gleitfläche 4 trocken bleibt oder
austrocknet, so daß sie ihre Gleiteigenschaft ganz oder weitgehend verliert.

Wie Figur 1 zeigt, werden die Pfähle 2 nach der Erfindung
in unterschiedlichen Abständen eingesetzt. Am Fuß der
Rutschung (ganz rechts in Figur 1) wird durch Einsetzen
von Pfählen unter relativ geringen gegenseitigen Abständen
von 1 Meter ein Widerlager aufgebaut. Weiter links in Figur 1, d. h. längs des Rutschhanges, haben die Pfähle, je
nach den vorliegenden Verhältnissen größere gegenseitige
Abstände. Die Pfähle werden unten und bis zur Mitte des
Hanges lotrecht, weiter oben mehr und mehr zum Hang geneigt
eingesetzt. In Figur 1 und 2 ist nicht erkennbar, daß die
Pfähle, in Draufsicht auf den Hang, in einem quadratischen
Raster angeordnet werden, also jeweils an den Eckpunkten
der Rasterflächen, wobei die Raster im unteren Bereich Kantenlängen von 1 Meter und in höheren Bereichen Kantenlängen
von bis zu 6 Meter haben können. Die Querschnitte der Pfähle
können z. B. 60 mm, 120 mm oder mehr betragen. Die Pfähle
werden durch die Gleitfläche in den festen Boden mindestens
2 Meter tief eingebracht.

Drainagerohre 16 sorgen für einen Abfluß des in die Deckschicht eindringenden Wassers nach außen.

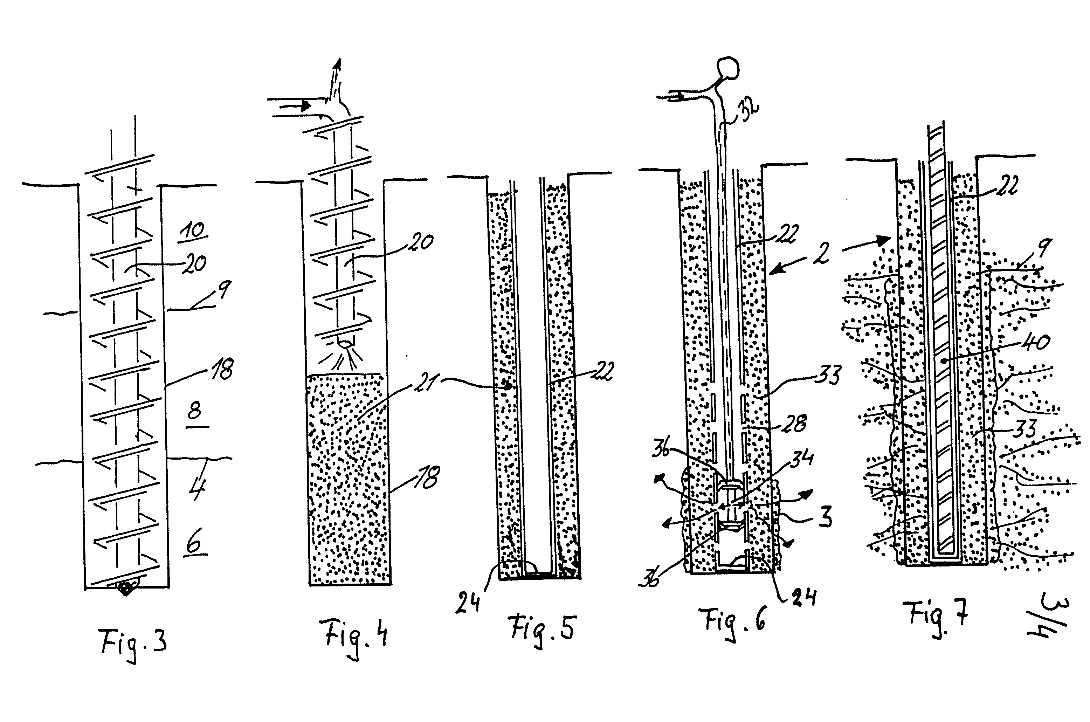

Figur 3 bis 7 zeigen Phasen der Herstellung von Pfählen
nach der Erfindung und der Bodeninjektion. Hier ist wiederum die Breite gegenüber der Höhe stark übertrieben dargestellt.

Nach Figur 3 wird zunächst ein Bohrloch 18 mit Hilfe einer
Hohlschnecke 20 hergestellt. Während des Bohrens werden
dem Hohlrohr der Schnecke Bodenproben entnommen, wodurch
man Aufschluß über die Höhenlage der Gleitfläche 4 und
der Grenzfläche 9 zwischen gestörtem Boden und Deckschicht
erhält.

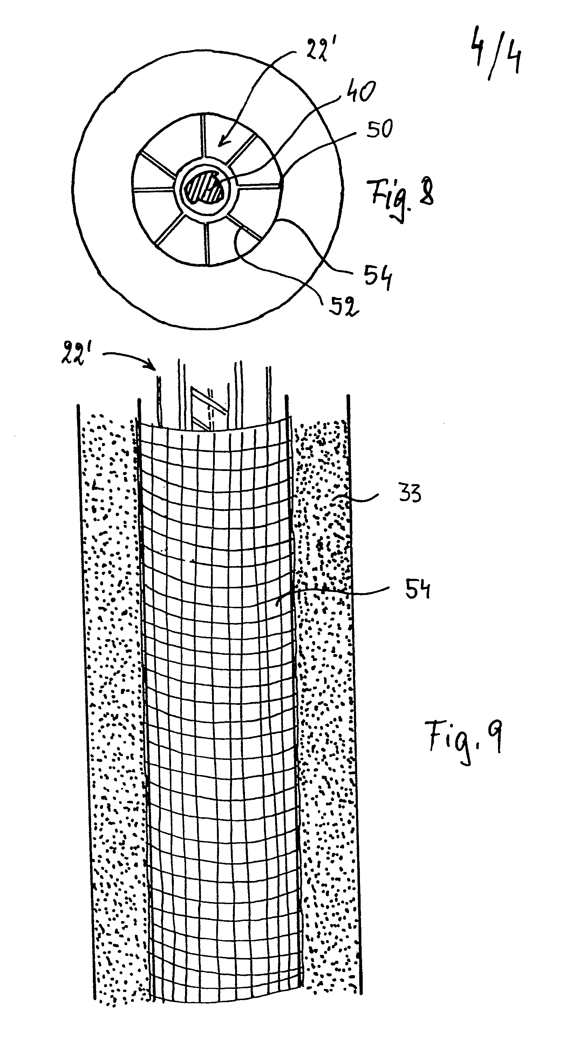

Beim Herausziehen der Hohlschnecke (Figur 4) wird durch deren
Rohr flüssiges Verfestigungsmittel 21 in das Bohrloch 18
gefüllt, wodurch das Bohrloch beim Herausziehen gegen Einfallen geschützt wird. Als Verfestigungsmittel dient vorzugsweise ein durch hochtouriges Mischen erzielter kolloidaler Zement in Form einer Zement-Suspension.

In die noch flüssige Zement-Suspension wird dann (Figur 5)
ein aus Kunststoff bestehendes Ventilrohr 22 mit Bodenverschluß 24 zentrisch bis zum unteren Ende des Bohrlochs eingeführt. Zur Zentrierung sind an der Außenwand des Ventilrohrs nicht dargestellte Kunststoff-Federbügel befestigt,
die sich an der Wandung des Bohrlochs abstützen. Das Ventilrohr hat äußere Ringnuten 26, von denen aus Öffnungen
28 ins Rohrinnere führen. In den Ringnuten befinden sich
elastische Manschetten 30, so daß sich Auslaßventile 31
nach Art von Fahrradventilen ergeben, die durch Druck von
innen her geöffnet werden können. Derartige Ventilrohre
sind bekannt. Das Ventilrohr bleibt innen leer und trocken.

Beim Abbinden des Verfestigungsmittels, insbesondere
Zements, bildet sich ein Zylinder 33 aus hartem Material,
der das Ventilrohr umgibt. Dann wird in das Ventilrohr
bis zur dessen unterstem Ventil ein Druckrohr 32, z. B.
ein Gasrohr, eingeführt. Es hat nahe seinem unteren Ende
seitliche Austrittsöffnungen 34 und oberhalb und unterhalb
davon Abdichtungsmanschetten 36. Nun werden die Austrittsöffnungen 34, beginnend bei dem untersten Auslaßventil 31
des Ventilrohrs auf solche Höhen eingestellt, daß die Abdichtungsmanschetten 36 oberhalb und unterhalb eines Auslaßventils abdichten. Verfestigungsmittel wird nun unter Druck
aus dem Ventil nach außen gepreßt. Hierdurch wird der das
Ventilrohr umgebende Zylinder 33 in Höhe des Ventils aufgebrochen, und das Verfestigungsmittel dringt nach außen
in das das Bohrloch umgebende Erdreich oder den Fels ein.
Dieser Vorgang wird von der Bohrlochsohle beginnend nach
oben bis zur Grenzfläche 9 durchgeführt. Es wird also
Verfestigungsmittel in den Bereich 6 aus festem Boden oder
Fels und in die Schicht 8 aus gestörtem Boden injiziert,
jedoch nicht in die darüberliegende Deckschicht 10.


Als Verfestigungsmittel dient zweckmäßigerweise ebenfalls
kolloidaler Zement. Besteht der Bereich 6 aus Fels geringer
Durchlässigkeit, in den Zement wegen seiner Korngröße nicht
einzudrücken ist, so kann dort ein Gemisch aus Wasserglas
und Härter als Verfestigungsmittel verwendet werden.


Nach Abschluß dieser Arbeiten wird das Druckrohr entfernt.
Der Pfahl kann dann so verbleiben, wenn er mit hohlem Ventilrohr ausreichend Festigkeit gegen Biegungs- und Scherkräfte hat. Will man die Festigkeit erhöhen, so kann in
das Ventilrohr Verfestigungsmittel, insbesondere Zement-
Suspension eingefüllt werden, und es können Bewehrungsstäbe oder mindestens ein Bewehrungsstab 40 bis zum Unterende
des Ventilrohrs eingetaucht werden. Es ergibt sich dann
ein Pfahl mit einem Stahlbetonkern und einem das Kunststoff-
Ventilrohr 22 umgebenden Zylinder 33.

Nachdem der Bohrvorgang Aufschluß über die Bodenbeschaffenheit in verschiedenen Höhenlagen gegeben hat, kann beim
Injizieren je nach Höhe ein passender Injektionsdruck und
eine passende Injektionsmenge, je nach den statischen Verhältnissen gewählt werden. Diese Daten können während des
Injektionsvorganges elektronisch aufgezeichnet werden.

Wie Figur 8 und 9 zeigen, kann das Kunststoffrohr 22' als
Profilrohr ausgebildet sein. Sein Innenquerschnitt ist,
wie in dem oben erwähnten Ausführungsbeispiel, kreisförmig.
Sein Außenquerschnitt jedoch sternförmig. Um die Außenfläche oder zumindest um die durch die Sternspitzen gebildeten
Außenkanten 50 des Kunststoffrohrs ist eine Bewehrungslage 54
aus einem Netz von Kunststoffasern gelegt, die fest an den
Außenkanten haftet. Bevor dies geschieht, werden jedoch die
Ringnuten (26 in Fig.2) eingedreht, und zwar so weit, daß
sie die Sternrippen 52 vollständig durchschneiden und einen
zylindrischen Boden haben. Dann werden die elastischen
Manschetten (30 in Fig.2) eingebracht, die die Verschlußteile der Auslaßventile bilden. Erst dann wird die Bewehrungslage aus Kunststoffasern aufgebracht und mit den
Sternrippen verklebt.

Zement, der sich entsprechend Figur 5 später in dem Ringraum zwischen Kunststoffrohr und Bohrlochwandung befindet,
hat eine wesentlich größere Haftung an einem derartig
bewehrten Kunststoffrohr als an einem glatten Kunststoffrohr. Er springt auch bei starker Biegebeanspruchung des
Pfahls nicht vom Kunststoffrohr ab.

- - - - - - - -

99-10

PATENTANSPRÜCHE

1. Verfahren zur Stabilisierung von Rutschhängen durch Einbringen von Pfählen bis in den festen, ungestörten Boden
oder Fels und Injizierung eines Verfestigungsmittels aus
den Pfählen in den Fels oder Boden, g e k e n n z e i c h .
n e t durch folgende Merkmale:

a) Es wird eine Bohrung niedergebracht, die bis in den
Bereich (6) aus Fels oder festem Boden reicht;

b) das Bohrloch (18) wird mit Verfestigungsmittel (insbesondere Zement-Suspension) gefüllt;

c) ein an seinem unteren Ende geschlossenes Rohr (Ventilrohr 22), insbesondere aus Kunststoff, das über seine
Länge verteilte Auslaßventile (31) hat, wird zentrisch
in das Bohrloch und in das noch flüssige Verfestigungsmittel eingeführt;

d) in das Ventilrohr (22) wird ein Druckrohr (32) eingeführt, das nahe seinem unteren Ende mindestens eine
Austrittsöffnung (34) hat und unterhalb und oberhalb
der Austrittsöffnung gegen das Ventilrohr abdichtet;

e) nach dem Abbinden des Verfestigungsmittels im Bohrloch wird die Höhenlage der Austrittsöffnung des
   Druckrohrs nacheinander auf die Höhenlagen von Auslaßventilen in den Bereichen unterhalb der Grundwasser führenden Deckschicht (10) eingestellt und jeweils Verfestigungsmittel durch die Auslaßventile
   unter Aufbrechen des das Ventilrohr umgebenden ausgehärteten Verfestigungsmittels in Fels oder Erdreich injiziert.

2. Verfahren nach Anspruch 1, dadurch  g e k e n n -
   z e i c h n e t ,  daß zum Bohren eine Hohlschnecke
   verwendet wird und daß beim Herausziehen der Hohlschnekke durch deren Hohlrohr Verfestigungsmittel in das Bohrloch gefüllt wird.

3. Verfahren nach Anspruch 1 oder 2, dadurch  g e k e n n -
   z e i c h n e t ,  daß nach Entfernen des Druckrohrs (32)
   das Ventilrohr (22) mit Verfestigungsmittel, insbesondere
   Zement-Suspension, gefüllt und mindestens ein Bewehrungsstab (40) eingetaucht wird.

4. Ventilrohr zur Durchführung des Verfahrens nach Anspruch
   1, dadurch  g e k e n n z e i c h n e t ,  daß das Ventilrohr (22') eine (insbesondere sternförmige) profilierte
   Außenwandung hat, an der eine Bewehrungslage (54) aus
   Kunststoffasern haftet.

5. Ventilrohr nach Anspruch 4, dadurch  g e k e n n -
   z e i c h n e t ,  daß die Bewehrungslage netzartig
   ausgebildet ist.


- - - - - -

Fig. 1

Fig. 2

Fig. 3

Fig. 4

Fig. 5

Fig. 6

Fig. 7

0064663

22'

40

50

Fig. 8

54

52

22'

33

54

Fig. 9